# EUROPÄISCHE PATENTSCHRIFT

(11) **EP 2 765 382 B1**
(45) Veröffentlichungstag und Bekanntmachung des Hinweises auf die Patenterteilung: **10.01.2018**
(21) Anmeldenummer: 14000172.8
(22) Anmeldetag: 17.01.2014
(51) Int. Cl.: F28D 20/00, F24J 3/08

(54) **Wärmetauscher und Wärmemanagementsystem mit einem solchen Wärmetauscher**
Heat exchanger and thermal management system with such a heat exchanger
Échangeur de chaleur et système de gestion thermique doté d'un tel échangeur de chaleur

(30) Priorität: 06.02.2013 DE 102013001995
(43) Veröffentlichungstag der Anmeldung: 13.08.2014
(73) Patentinhaber: Vögerl, Albert, 92318 Neumarkt (DE)
(72) Erfinder: Vögerl, Albert, 92318 Neumarkt (DE)
(74) Vertreter: FDST Patentanwälte

(56) Entgegenhaltungen:
- EP-A2- 0 056 797
- WO-A1-94/18510
- WO-A1-96/14544
- CH-A- 292 911
- US-A- 5 339 890

## Beschreibung

Die Erfindung betrifft einen Wärmetauscher zur Wärmeübertragung zwischen einem Wärmeträgermedium und einer umgebenden Flüssigkeit. Des Weiteren betrifft die Erfindung ein Wärmemanagementsystem mit einem solchen Wärmetauscher.

Zur Versorgung von Kühlkreisläufen für Maschinen werden herkömmlicherweise Kältemaschinen eingesetzt, die das in dem Kühlkreislauf strömende Wärmeträgermedium (meist Wasser) auf eine gewünschte Temperatur abkühlen. Ein Nachteil der Kältemaschinen ist jedoch deren hoher Energieverbrauch.

Als energiesparende Alternative werden teilweise diese Kühlkreisläufe auch in Kühltürmen über Fluid-Luft-Wärmetauscher oder in direktem Kontakt des Fluids mit der Luft abgekühlt. Ein limitierender Faktor für die erreichbare Kühlkreistemperatur ist hierbei die Umgebungstemperatur, die häufig einer hohen Jahres- und/oder tageszeitlichen Schwankungen unterliegt.

Alternativ werden die Kühlkreisläufe auch in kalten Flüssigkeiten wie beispielsweise Grund- oder Flusswasser, die beispielsweise Becken oder Tanks vorgehalten werden, abgekühlt. Hierfür sind Wärmetauscher in verschiedenen Formen bekannt. Typischerweise werden häufig Rohrbündelwärmetauscher eingesetzt, die das Wärmeträgermedium durch U-förmig gebogene Rohrbündel leiten und die in der Flüssigkeit eines solchen Tanks eintauchen.

Aus EP 0 056 797 A2 ist ein Wärmetauscher für einen Erdwärmespeicher bekannt gemäss dem Oberbegriff des Patentanspruchs 1. Der Wärmetauscher weist ein Rohrbündel auf, dessen Rohre am Umfang eines Zylinders angeordnet sind. Die unteren Enden der Rohre sind mit einem zentralen Sammelrohr verbunden. An ihrem oberen Ende münden die Rohre in eine Ringleitung, die an einer Seite mit einem weiteren Sammelrohr verbunden ist. Zwischen den Sammelrohren kann eine wärmeübertragende Flüssigkeit im Kreislauf geführt werden. Der Wärmeaustauscher wird mit lotrecht ausgerichtetem Rohrbündel in eine mit einer Tonsupension gefüllte Bodenöffnung eingebracht. Die Bodenöffnung wird anschließend unter teilweiser Verdrängung der Tonsuspension mit Schüttmaterial aufgefüllt.

Weitere Wärmetauscher zum Wärmeaustausch mit dem Untergrund sind aus WO 96/14544 A1, WO 94/18510 A1 und US 5,339,890 A bekannt. Auch diese Wärmetauscher umfassen jeweils ein Rohrbündel, das in lotrechter Ausrichtung in der Erde angeordnet wird.

Wiederum andere Wärmetauscher zum Wärmeaustausch zwischen zwei Flüssigkeiten oder zwischen einer Flüssigkeit und einem Gas sind aus CH 292 911 A, DE 7 930 501 U1, US 2011/0146338 A1 und FR 1 161 500 A bekannt.

Der Erfindung liegt die Aufgabe zugrunde, einen einfach aufgebauten, aber dennoch effizienten Wärmetauscher anzugeben. Des Weiteren liegt der Erfindung die Aufgabe zugrunde, ein einfach aufgebautes und effizientes Wärmemanagementsystem anzugeben.

Diese Aufgabe wird hinsichtlich eines Wärmetauschers erfindungsgemäß gelöst durch die Merkmale des Anspruchs 1. Hinsichtlich eines Wärmemanagementsystems wir die Aufgabe erfindungsgemäß gelöst durch die Merkmale des Anspruchs 12. Vorteilhafte und teils für sich erfinderische Ausführungsformen und Weiterentwicklungen der Erfindung sind in den Unteransprüchen und der nachfolgenden Beschreibung dargelegt.

Der erfindungsgemäße Wärmetauscher ist zur Wärmeübertragung zwischen einem Wärmeträgermedium und einer umgebenden Flüssigkeit vorgesehen. Erfindungsgemäß umfasst der Wärmetauscher zur Leitung des Wärmeträgermediums eine erste Hauptleitung und eine zweite Hauptleitung. Der Durchflussquerschnitt der ersten Hauptleitung wird hierbei als Hauptdurchflussquerschnitt bezeichnet. Des Weiteren umfasst der Wärmetauscher einen Wärmetauscherabschnitt, der von dem Wärmeträgermedium durchströmbar ist. Der Wärmetauscherabschnitt weist dabei einen als Wärmetauscherdurchflussquerschnitt bezeichneten Durchflussquerschnitt auf, wobei dieser Wärmetauscherdurchflussquerschnitt gegenüber dem Hauptdurchflussquerschnitt vergrößert ist. Der Wärmetauscherabschnitt ist außerdem an einem ersten Ende mit der ersten Hauptleitung und an einem zweiten Ende mit der zweiten Hauptleitung derart verbunden, dass das Wärmeträgermedium zwischen der ersten Hauptleitung und dem Wärmetauscherabschnitt bzw. zwischen der zweiten Hauptleitung und dem Wärmetauscherabschnitt im Wesentlichen, d.h. näherungsweise, hydraulisch symmetrisch verteilt wird.

Unter "hydraulisch symmetrischer Verteilung" wird hier und im Folgenden verstanden, dass das Wärmeträgermedium von der ersten bzw. der zweiten Hauptleitung derart auf den Wärmetauscherabschnitt übertragen wird, dass das Wärmeträgermedium in jedem Teilquerschnitt des Wärmetauscherdurchflussquerschnitts - abgesehen von Randeffekten - stets mit näherungsweise gleicher Strömungsgeschwindigkeit strömt. Diese - nahezu - homogene Durchströmung des Wärmetauscherdurchflussquerschnitts führt vorteilhafterweise in dem Wärmetauscherabschnitt zu einer gleichmäßigen Wärmeübertragung zwischen dem Wärmeträgermedium und der Umgebung bzw. der Flüssigkeit.

Durch den im Vergleich zu dem Hauptdurchflussquerschnitt vergrößerten Wärmetauscherdurchflussquerschnitt wird außerdem vorteilhafterweise erreicht, dass das Wärmeträgermedium beim Durchströmen des Wärmetauscherabschnitts eine im Vergleich zur Durchströmung der ersten Hauptleitung verlangsamte Strömungsgeschwindigkeit aufweist. Dies hat den Vorteil, dass dem Wärmeträgermedium eine besonders lange Verweilzeit in dem Wärmetauscherabschnitt zur Verfügung steht, die einen verbesserten Wärmeaustausch zur Folge hat. Vorzugsweise ist hierzu der Wärmetauscherdurchflussquerschnitt deutlich größer als der Hauptdurchflussquerschnitt, beispielsweise mindestens doppelt so groß.

Vorzugsweise ist der Wärmetauscherabschnitt aus Edelstahl gefertigt. Im Rahmen der Erfindung kann der Wärmetauscherabschnitt aber auch aus Aluminium oder wärmeleitfähig optimiertem Kunststoff gefertigt sein.

In bevorzugter Ausführung entspricht der Durchflussquerschnitt der zweiten Hauptleitung dem Hauptdurchflussquerschnitt, also dem Durchflussquerschnitt der ersten Hauptleitung. Dies hat den Vorteil, dass die Strömungsgeschwindigkeit des Wärmeträgermediums in der ersten und in der zweiten Hauptleitung gleich ist.

In besonders bevorzugter Ausführung weist der Wärmetauscherabschnitt in Strömungsrichtung des Wärmeträgermediums eine langgestreckte Form auf. Vorzugsweise ist der Wärmetauscherabschnitt hierbei deutlich länger ausgeführt als die größte, senkrecht zur Strömungsrichtung stehende Erstreckung der von dem Wärmeträgermedium durchströmten Querschnittsfläche des Wärmetauscherabschnitts. Beispielsweise beträgt die Länge mindestens das Dreifache dieser Erstreckung. Insbesondere weist der Wärmetauscherabschnitt eine Länge von mindestens 4 m auf. Die durch den Wärmetauscherabschnitt gebildete Wärmeübertragungsstrecke für das Wärmeträgermedium ist somit besonders groß, so dass dem Wärmeträgermedium während der Durchströmung des Wärmetauscherabschnittes eine besonders lange Zeit zur Wärmeübertragung mit der Umgebung bzw. der umgebenden Flüssigkeit zur Verfügung steht.

Erfindungsgemäß weist der Wärmetauscherabschnitt eine hohlzylinderartige Geometrie auf. Hierunter wird verstanden, dass das Wärmeträgermedium innerhalb des Wärmetauscherabschnitts mit Abstand zu einer zentralen Achse des Wärmetauscherabschnitts entlang einer Zylindermantelfläche geführt ist. Mit anderen Worten liegt der Wärmetauscherdurchflussquerschnitt vollständig zwischen zwei konzentrischen Zylindermantelflächen. Hierdurch weist der Wärmetauscherabschnitt wenigstens eine Kontaktfläche (oder einen Kontaktflächenabschnitt) auf, die (bzw. der) mit ihrer Flächennormalen von der hohlzylinderartigen Geometrie nach außen gerichtet ist, und wenigstens eine weitere Kontaktfläche (oder einen weiteren Kontaktflächenabschnitt), die (bzw. der) mit ihrer Flächennormalen zur Innenseite der hohlzylinderartigen Geometrie gerichtet ist. Das im Wärmetauscherabschnitt fließende Wärmeträgermedium ist also sowohl außenseitig als auch innenseitig von der umgebenden Flüssigkeit umgeben.

In einer möglichen Ausführung der Erfindung weist der Wärmetauscherabschnitt einen einzigen Strömungskanal auf, der im Querschnitt gesehen durch einen Hohlzylinderschlitz gebildet ist. Mit anderen Worten entspricht der Wärmetauscherabschnitt in dieser Ausführung einem doppelwandigen Rohr, dessen innen- und außenseitigen Rohrwandungen einen Hohlzylinder bilden. Jede der Rohrwandungen bildet also auch eine nach außen bzw. nach innen gerichtete Kontaktfläche des Wärmetauscherabschnitts. Das Wärmeträgermedium strömt in diesem Fall in dem Hohlzylinderschlitz, das heißt zwischen der innen- und der außenseitigen Rohrwandung. Aufgrund der symmetrischen Verteilung des Wärmeträgermediums auf den Wärmetauscherabschnitt strömt das Wärmeträgermedium über die gesamte ringförmige Querschnittsfläche des Hohlzylinderschlitzes - zumindest in hinreichendem Abstand zu den Einmündungsstellen am oberen und unteren Ende des Wärmetauscherabschnitts - annähernd mit homogener (d.h. in Umfangsrichtung konstanter) Strömungsgeschwindigkeit.

In bevorzugter Ausführung weist der Wärmetauscherabschnitt aber mehrere Strömungskanäle auf, die symmetrisch zueinander um den Zylindermantel der hohlzylinderartigen Geometrie verteilt angeordnet sind. Die Strömungskanäle sind dabei insbesondere zwischen dem ersten und dem zweiten Ende des Wärmetauscherabschnitts langgestreckt, d.h. geradlinig ausgebildet und verlaufen achsparallel. Grundsätzlich können die Strömungskanäle im Rahmen der Erfindung aber auch zur Achse des hohlzylinderartigen Wärmetauscherabschnitts angestellt sein, insbesondere wendelförmig verlaufen. Jeder dieser Strömungskanäle bildet dabei mit seinem Durchflussquerschnitt jeweils einen der Teilquerschnitte des Wärmetauscherdurchflussquerschnitts, in denen das Wärmeträgermedium mit gleicher Strömungsgeschwindigkeit strömt.

Im Rahmen der Erfindung ist es dabei denkbar, den Wärmetauscherabschnitt aus zwei koaxial zueinander angeordneten Rohren aus Wellblech zu bilden, wobei die Wellenrücken bzw. Wellentäler der beiden Rohre in Längsrichtung des Wärmetauscherabschnitts verlaufen. Diese beiden "Wellblechrohre" sind dabei derart dimensioniert, dass jeweils ein Wellenrücken des innenliegenden Rohres mit einem Wellental des außenliegenden in Kontakt steht und an dieser Stelle vorzugsweise mit Letzterem verbunden ist. Dadurch bildet ein jedes Wellental des innenliegenden Rohres mit einem Wellenrücken des außenliegenden Rohres einen der Strömungskanäle.

Bevorzugt und in herstellungstechnisch zweckmäßiger Ausführung, sind die Strömungskanäle jedoch durch jeweils ein einzelnes Rohr gebildet, das in Längsrichtung des Wärmetauscherabschnitts verläuft. Zweckmäßigerweise sind die Rohre dabei über die Länge des Wärmetauscherabschnitts durch wenigstens einen Abstandhalter parallel zueinander fixiert. Der Abstandhalter ist beispielsweise durch eine Platte oder einen Ring gebildet, an dem die Rohre gehaltert oder durch die bzw. den dir Rohre hindurchgeführt sind.

Aufgrund der langgestreckten, geradlinigen Form des Wärmetauscherabschnitts bzw. insbesondere von dessen Strömungskanälen wird auf einfache Weise ermöglicht, einen Temperaturgradienten der umgebenden Flüssigkeit vorteilhaft auszunützen. Vorzugsweise wird das Wärmeträgermedium dabei - analog zu dem Prinzip einer Gegenstromkühlung - derart durch den Wärmetauscherabschnitt geleitet, dass der sich ausbildende Temperaturgradient des Wärmeträgermediums zu dem Temperaturgradienten der umgebenden Flüssigkeit gleichgerichtet ist.

Erfindungsgemäß sind der Wärmetauscherabschnitt, und insbesondere dessen Strömungskanäle, am ersten und zweiten Ende zentral mit der ersten Hauptleitung bzw. mit der zweiten Hauptleitung verbunden. Die erste und die zweite Hauptleitung sind hierbei insbesondere auf einer Mittelachse oder Symmetrieachse der hohlzylinderartigen Geometrie des Wärmetauscherabschnitts angeordnet und von dort aus über jeweils gleich lange als Verteilerkanäle bezeichnete Verbindungskanäle, die jeweils den gleichen Durchflussquerschnitt aufweisen, mit dem Wärmetauscherabschnitt verbunden.

In bevorzugter Ausführung sind die erste und die zweite Hauptleitung über jeweils einen Verteiler sternförmig mit dem Wärmetauscherabschnitt gekoppelt. Mit anderen Worten erstrecken sich die Verteilerkanäle radialstrahlenförmig von der jeweiligen - zentralen - Hauptleitung in Richtung des oder jeden Strömungskanals. In einfacher Ausführung handelt es sich bei dem Verteiler um eine Platte, deren Grundfläche der Querschnittsfläche des Wärmetauscherabschnitts entspricht. An diese Platte sind die erste und die zweite Hauptleitung senkrecht, das heißt in Normalendrichtung der (Verteiler-)Platte, angesetzt und mit den Verteilerkanälen verbunden. Die Verteilerkanäle sind hierbei insbesondere senkrecht zu der jeweiligen Hauptleitung, also in der Plattenebene, bspw. als Bohrungen in die Platte eingebracht und münden wiederum senkrecht zur Plattenebene in den jeweiligen Strömungskanal.

Alternativ ist die (Verteiler-)Platte gegenüber der Querschnittsfläche des Wärmetauscherabschnitts verkleinert. Hierbei sind die jeweiligen Verteilerkanäle durch Verteilerrohre verlängert und aus der Platte herausgeführt. Die Strömungskanäle sind dabei über jeweils ein Winkelstück an die Verteilerrohre angebunden. Die Verteilerplatte ist beispielsweise aus Aluminium gefertigt.

In einer weiteren alternativen Ausführung ist der Verteiler als Speichenrad ausgebildet. Hierbei sind die Verteilerkanäle von der jeweiligen Hauptleitung in Form von Rohren radial nach außen auf eine Ringscheibe geführt, innerhalb derer der jeweilige Verteilerkanal in die Strömungsrichtung der Strömungskanäle umgelenkt wird. Diese Ringscheibe dient hierbei zweckmäßigerweise zusätzlich als Distanzstück zwischen den Verteilerkanälen sowie ggf. zwischen den die Strömungskanäle bildenden Rohren.

In bevorzugter und platzsparender Ausführung ist die zweite Hauptleitung innerhalb der von dem Wärmetauscherabschnitt umschlossenen Fläche in Richtung des ersten Endes des Wärmetauscherabschnitts geführt. Insbesondere ist hierbei die zweite Hauptleitung im Bereich des ersten Endes des Wärmetauscherabschnitts zwischen den Verteilerkanälen des Verteilers aus dem Wärmetauscherabschnitt herausgeführt.
In zweckmäßiger Ausführung ist die zweite Hauptleitung gegenüber der Umgebung bzw. der den Wärmetauscher umgebenden Flüssigkeit thermisch isoliert. Dadurch wird effektiv verhindert, dass eine Wechselwirkung des Wärmeträgermediums, das in der zweiten Hauptleitung strömt, mit der Umgebung bzw. der umgebenden Flüssigkeit stattfindet. Dadurch kann beispielsweise das abgekühlte Wärmeträgermedium in der Flüssigkeit zurückgeführt werden, ohne dass sich das Wärmeträgermedium im Bereich höherer Flüssigkeitstemperaturen wieder erwärmt.

Im Rahmen der Erfindung ist es grundsätzlich denkbar, dass die Strömungsrichtung des Wärmeträgermediums und damit der Wärmetauscherabschnitt selbst im Betriebszustand im Wesentlichen horizontal ausgerichtet sind. In dieser Ausführung kann der Wärmetauscher beispielsweise zur Kühlung des Wärmeträgermediums in einem Fluss oder in einer vergleichbaren (flachen und horizontal ausgerichteten) Wärmesenke angeordnet sein. Bevorzugt ist der Wärmetauscher aber derart eingesetzt, dass die Strömungsrichtung und somit der Wärmetauscherabschnitt im Wesentlichen, das heißt exakt oder näherungsweise, vertikal ausgerichtet ist. In dieser Ausführung ist der Wärmetauscher insbesondere zum Einsatz in einem mit Flüssigkeit gefüllten Bohrloch, beispielsweise einem Brunnen, einer Zisterne oder bevorzugt in einem in den Erdboden eingebrachten Energiepfahl vorgesehen. Unter "Energiepfahl" wird ein massiver Pfahl oder ein mit Flüssigkeit gefüllter Hohlpfahl verstanden, der mit einem Wärmetauscher ausgestattet ist.

Das erfindungsgemäße Wärmemanagementsystem umfasst einen Wärmekreislauf für ein Wärmeträgermedium und mindestens einen mit Flüssigkeit gefüllten Hohlpfahl. Der Hohlpfahl ist dabei in den Erdboden eingelassen und weist eine im Vergleich zu seiner Breite wesentlich größere Länge auf. Zudem ist der Hohlpfahl mit seiner Längsrichtung im Wesentlichen, d.h. exakt oder näherungsweise, senkrecht zur Erdoberfläche ausgerichtet. Außerdem umfasst das Wärmemanagementsystem einen Wärmetauscher der vorstehend beschriebenen Art, der mit dem ersten Ende seines Wärmetauscherabschnitts erdoberflächennah in dem Hohlpfahl angeordnet ist. Das heißt, dass der Wärmetauscherabschnitt mit seinem ersten Ende im Bereich eines oberen Endes des Hohlpfahls angeordnet ist, wobei das zweite Ende des Wärmetauscherabschnitts vorzugsweise erdoberflächenfern - das heißt tiefer als das erste Ende - in dem Hohlpfahl angeordnet ist. Vorzugsweise reicht der Wärmetauscherabschnitt dabei mit seinem zweiten Ende bis oder wenigstens nahezu bis an das untere Ende des Hohlpfahls. Der Wärmetauscher ist mittels seiner ersten und zweiten Hauptleitung an den Wärmekreislauf angeschlossen und von dem Wärmeträgermedium zur Wärmeübertragung zwischen der Flüssigkeit und dem Wärmekreislauf durchströmbar.

Die Flüssigkeit, mit der der Hohlpfahl gefüllt ist, ermöglicht vorteilhafterweise durch wärmeinduzierte Umströmung des Wärmetauscherabschnitts eine besondere effektive Wärmeübertragung zwischen dem Wärmeträgermedium und der Flüssigkeit. Ferner ermöglicht die Flüssigkeit auch eine effiziente Wärmeübertragung zwischen dem den Hohlpfahl umgebenden Erdboden und der Flüssigkeit selbst. Aufgrund der ausgeprägten Längserstreckung und der senkrechten Einbaulage des Hohlpfahls stellt sich zudem im Betrieb des Wärmemanagementsystems innerhalb der Flüssigkeit in dem Hohlpfahl eine vorteilhafte Temperaturschichtung ein. Infolge dieser Temperaturschichtung bilden sich an beiden Längsenden des Hohlpfahls, also im Bereich des oberen und des unteren Endes, stark unterschiedliche Temperaturniveaus innerhalb der Flüssigkeit aus. Ein vorteilhafter Effekt dieser Temperaturschichtung besteht dabei darin, dass die Tief- und Hochtemperaturniveaus am unteren bzw. oberen Ende des Hohlpfahls auch bei einem Wärmeeintrag in den Hohlpfahl über den Wärmetauscher weitgehend konstant bleiben, da innerhalb des Hohlpfahls ein nahezu vermischungsfreier Austausch von erwärmten Flüssigkeitsvolumina mit kalter Flüssigkeit stattfindet. Gleiches gilt für eine Wärmeentnahme aus dem Hohlpfahl.

In bevorzugter Ausführung weist der Hohlpfahl eine Länge von mindestens 5 m, insbesondere eine Länge zwischen 20 m bis 40 m auf. Eine solche Länge unterstützt die Ausbildung der Temperaturschichtung und die damit einhergehende Temperaturkonstanz. Insbesondere stellt sich aufgrund der großen Länge des Hohlpfahls und der entsprechenden Einbautiefe in den Erdboden die Temperaturschichtung bereits von Haus aus durch Wärmeaustausch der Flüssigkeit im Hohlpfahl mit dem umgebenen Erdboden ein, was zu einer Angleichung der örtlichen Flüssigkeitstemperatur an das natürliche Temperaturprofil des Erdbodens führt. Für Kühlzwecke wird hierbei ausgenützt, dass ab einer Tiefe von etwa 10 m der Erdboden regelmäßig eine zumindest näherungsweise konstante und somit jahreszeitenunabhängige Temperatur aufweist. Diese Temperatur beträgt in gemäßigten Klimazonen typischerweise etwa 8°C. Der Wärmeaustausch mit dem umgebenen Erdboden erweitert hierbei die durch die Flüssigkeit abgegebene Wärmespeicherkapazität des Hohlpfahls und ermöglicht nach extensivem Wärmeeintrag oder Wärmeentzug eine schnelle energetische Regenerierung des Hohlpfahls.

In bevorzugter Ausführung ist der Hohlpfahl insbesondere durch ein Spannbetonrohr gebildet, das an dem bestimmungsgemäß unteren Ende flüssigkeitsdicht verschlossen ist und das an seinem oberen Ende im Einbauzustand durch einen Deckel verschlossen ist.

In zweckmäßiger Ausführung entspricht die Länge des Wärmetauscherabschnitts näherungsweise der Länge des Hohlpfahls oder unterschreitet diese geringfügig, so dass der Wärmetauscherabschnitt vollständig innerhalb des Hohlpfahls angeordnet werden kann.

Aufgrund der stabilen Temperaturschichtung in dem Hohlpfahl ist es außerdem möglich, den Hohlpfahl sowohl als Wärmesenke für Kühlzwecke als auch als Wärmequelle zum Heizen zu nutzen. Für diesen Zweck ist die erste Hauptleitung des Wärmetauschers als Vorlauf oder Rücklauf einsetzbar. Der Wärmetauscher wird hierbei zur Kühlung des Wärmeträgermediums derart betrieben, dass über die erste Hauptleitung das Wärmeträgermedium in den Wärmetauscherabschnitt eingeleitet wird und am zweiten Ende des Wärmetauscherabschnitts über die zweite Hauptleitung zurückgeleitet wird. Das Wärmeträgermedium strömt somit von oben nach unten durch die Flüssigkeitssäule des Hohlpfahls und wird dabei aufgrund der vorstehend beschriebenen Temperaturschichtung in dem Hohlpfahl durch die abnehmende Temperatur der Flüssigkeit in dem Hohlpfahl zunehmen gekühlt. Durch geeignete Dimensionierung des Wärmetauscherdurchflussquerschnitts und der dadurch erreichten besonders langsamen Strömungsgeschwindigkeit des Wärmeträgermediums wird hierbei eine möglichst hohe Angleichung der Temperatur des Wärmeträgermediums an das jeweilige Temperaturniveau der Flüssigkeit in dem Hohlpfahl erreicht. Bei Erreichen des zweiten Endes des Wärmetauscherabschnitts wird das Wärmeträgermedium über den Verteiler der zweiten Hauptleitung zugeführt und zurück zu dem Wärmekreislauf geleitet. Aufgrund der gegebenenfalls vorhandenen thermischen Isolierung der zweiten Hauptleitung kann sich das Wärmeträgermedium beim Durchströmen des Hohlpfahls von unten nach oben im Bereich der wärmeren Temperaturschichten nicht wieder erwärmen.

Für den umgekehrten Fall, nämlich dass das Wärmeträgermedium gegenüber der in dem Wärmekreislauf vorliegenden Temperatur aufgewärmt werden soll, wird in zweckmäßiger Ausführung das vergleichsweise kalte Wärmeträgermedium über die - gegebenenfalls thermisch isolierte - zweite Hauptleitung in das untere Ende des Hohlpfahls geleitet und dort in das zweite Ende des Wärmetauscherabschnitts eingeleitet. Von dort steigt das Wärmeträgermedium in dem oder den Strömungskanälen in Richtung des ersten Endes des Wärmetauscherabschnitts und wird dabei durch Wärmeübertragung von den zunehmend wärmeren Flüssigkeitsschichten in dem Hohlpfahl erwärmt. Bei Erreichen des ersten Endes des Wärmetauscherabschnitts wird das nun erwärmte Wärmeträgermedium über die erste Hauptleitung zurück in den Wärmekreislauf geführt. Im Rahmen der Erfindung kann die erste Hauptleitung zusätzlich ebenfalls thermisch isoliert sein.

Vorzugsweise bilden der erste Wärmekreislauf und der daran angeschlossene Wärmetauscher ein geschlossenes System. An diesem geschlossenen System ist beispielsweise eine einem Verbraucher zugeordnete Wärmequelle oder Wärmesenke, insbesondere eine zu kühlende oder zu temperierende Maschine oder alternativ eine Gebäudeheizung bzw. -kühlung, anschließbar.

In einer weiteren Ausführung des Wärmemanagementsystems sind in dem Hohlpfahl mehrere der vorstehend beschriebenen Wärmetauscher nebeneinander angeordnet. Je nach Querschnittsprofil des Hohlpfahls - polygonal oder kreisförmig - sind die Wärmetauscher hierbei in einer gitterförmigen oder in einer kreisförmigen Struktur in dem Hohlpfahl angeordnet. In fertigungstechnisch zweckmäßiger Ausführung weist der Hohlpfahl insbesondere ein kreisförmiges Querschnittsprofil auf. In diesem Fall sind die Wärmetauscher vorzugsweise vergleichbar zu Patronen in einer Trommel eines Revolvers in dem Hohlpfahl angeordnet. Hierbei kann im Rahmen der Erfindung einer der Wärmetauscher auch auf der "Drehachse der Trommel", das heißt der Mittelachse des Hohlpfahls, angeordnet sein.

Nachfolgend werden Ausführungsbeispiele der Erfindung anhand einer Zeichnung näher erläutert. Darin zeigen:
- Fig. 1: in schematischer Seitenansicht einen Wärmetauscher,
- Fig. 2: in vergrößerter Darstellung mit Unterbrechungen den Wärmetauscher gemäß Fig. 1,
- Fig. 3: in einem Schnitt III-III gemäß Fig. 2 den Wärmetauscher gemäß Fig. 1,
- Fig. 4: in einem Schnitt IV-IV gemäß Fig. 2 den Wärmetauscher gemäß Fig. 1,
- Fig. 5: in schematischer Seitenansicht ein Wärmemanagementsystem mit einem im Erdboden angeordneten Hohlpfahl und einem darin angeordneten Wärmetauscher gemäß Fig. 1,
- Fig. 6: in Ansicht gemäß Fig. 2 ein alternatives Ausführungsbeispiel des Wärmetauschers,
- Fig. 7: in einem Schnitt VII-VI den Wärmetauscher gemäß Fig. 6,
- Fig. 8 u. 9: in Darstellung gemäß Fig. 7 zwei weitere alternative Ausführungsbeispiele des Wärmetauschers, und
- Fig. 10: in Ansicht gemäß Fig. 2 den Wärmetauscher gemäß Fig. 9.

Einander entsprechende Teile sind in allen Figuren stets mit gleichen Bezugszeichen versehen.

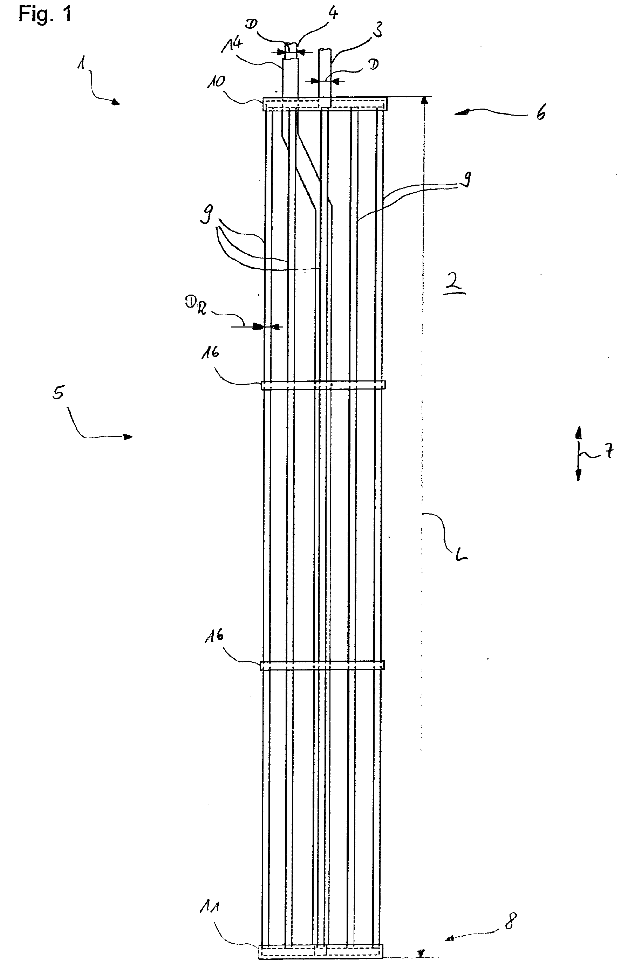

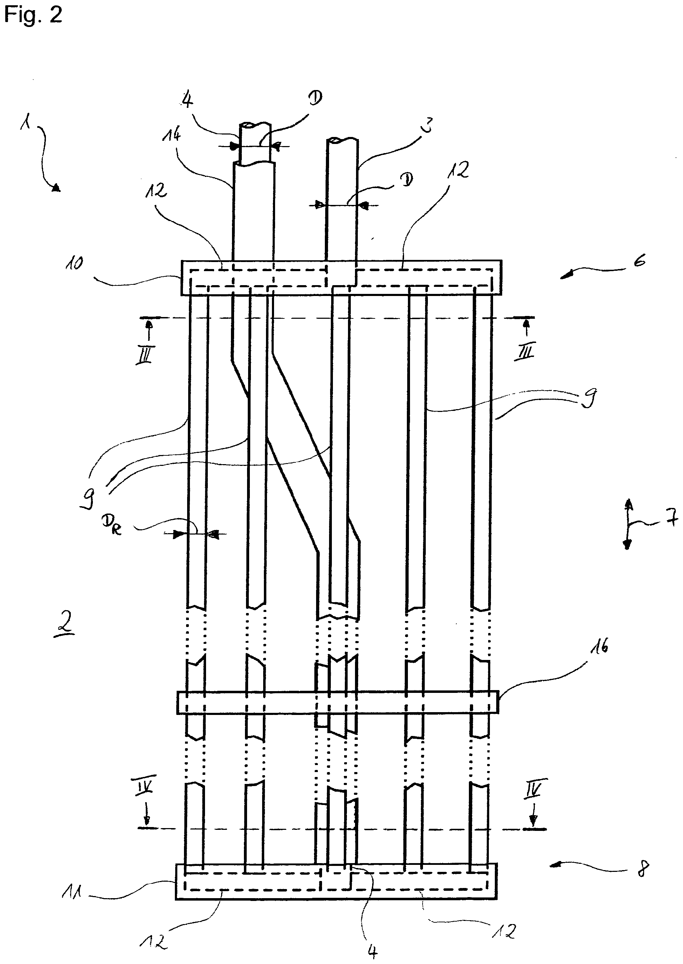

In Fig. 1 und in Fig. 2 ist ein Wärmetauscher 1 dargestellt, der zur Wärmeübertragung zwischen einem Wärmeträgermedium und einer den Wärmetauscher umgebenden Flüssigkeit 2 vorgesehen ist. Der Wärmetauscher 1 umfasst eine erste Hauptleitung 3 und eine zweite Hauptleitung 4. Des Weiteren umfasst der Wärmetauscher 1 einen Wärmetauscherabschnitt 5, der von dem Wärmeträgermedium durchströmbar ist. Der Wärmetauscherabschnitt 5 ist an einem ersten Ende 6 mit der ersten Hauptleitung 3 und an einem dem ersten Ende 6 in einer Längsrichtung 7 entgegengesetzten zweiten Ende 8 mit der zweiten Hauptleitung 4 verbunden.

Die erste Hauptleitung 3 weist dabei einen Hauptdurchflussquerschnitt D auf. Der Durchflussquerschnitt der zweiten Hauptleitung 4 entspricht hierbei dem Hauptdurchflussquerschnitt D. Der Wärmetauscherabschnitt 5 ist aus acht, jeweils einen Strömungskanal für das Wärmeträgermedium bildenden Rohren 9 gebildet, die in Längsrichtung 7 geradlinig zwischen dem ersten Ende 6 und dem zweiten Ende 8 des Wärmetauscherabschnitts 5 verlaufen. Die Strömungsrichtung der Rohre 9 entspricht hierbei der Längsrichtung 7. Die einzelnen Rohrquerschnitte D_{R} sind außerdem derart dimensioniert, dass die Summe aller Rohrquerschnitte D_{R} den Hauptdurchflussquerschnitt D der ersten bzw. zweiten Hauptleitung 3, 4 deutlich, bspw. um das Doppelte, überschreitet. Dadurch ist die Strömungsgeschwindigkeit des Wärmeträgermediums in dem Wärmetauscherabschnitt 5 gegenüber den Hauptleitungen 3,4 verringert.

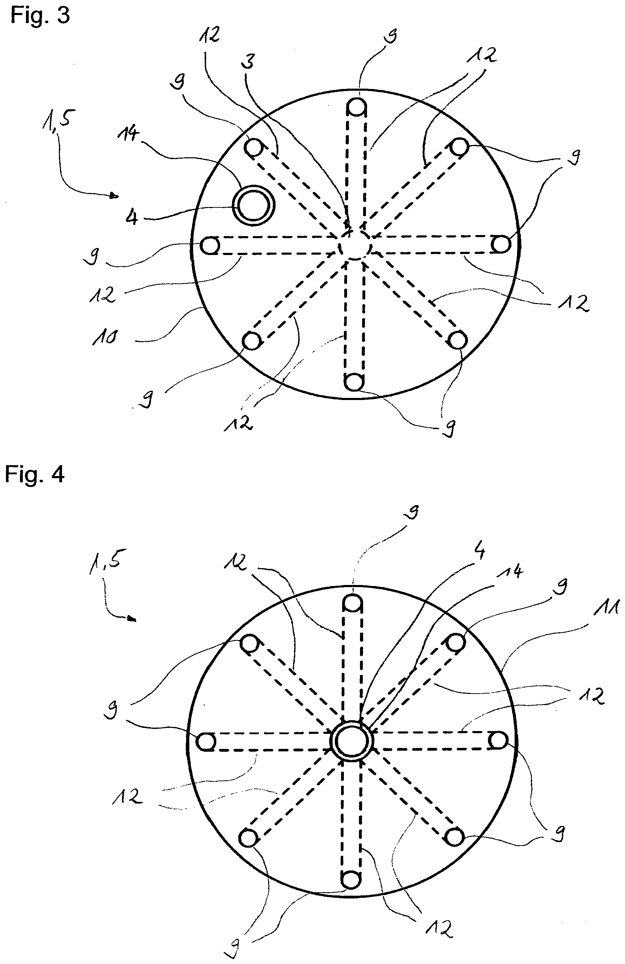

An dem ersten Ende 6 des Wärmetauscherabschnitts 5 sind dessen Rohre 9 über einen Verteiler, im Folgenden als erste Verteilerplatte 10 bezeichnet, mit der ersten Hauptleitung 3 verbunden. An dem zweiten Ende 8 sind die Rohre 9 über eine zweite Verteilerplatte 11 mit der zweiten Hauptleitung 4 verbunden. Wie aus den Figuren 3 und 4 ersichtlich ist, sind die acht Rohre 9 hierbei kreisringförmig an den Verteilerplatten 10 bzw. 11 angeordnet, so dass der Wärmetauscherabschnitt 5 eine hohlzylinderartige Geometrie aufweist. Das heißt, dass der Wärmetauscherabschnitt 5 mit seinen Rohren 9 einen nahezu kreisförmigen Flächenabschnitt umrandet.

Die erste Hauptleitung 3 ist zentral zu den Rohren 9, d.h. auf einer Mittelachse der (kreisförmigen) Verteilerplatte 10 auf diese aufgesetzt. Die Rohre 9 sind über jeweils gleich lange Verteilerkanäle 12, die den gleichen Querschnitt aufweisen und jeweils als Bohrung radial in die Verteilerplatte 10 eingebracht sind, mit der ersten Hauptleitung 3 verbunden. Des Weiteren ragen die Rohre 9 senkrecht von der, der ersten Hauptleitung 3 entgegengesetzten Seite der Verteilerplatte 10 in Längsrichtung 7 ab. Die zweite Hauptleitung 4 ist in entsprechender Art und Weise über die Verbindungsplatte 11 mit den Rohren 9 verbunden (s. Fig. 4). Im Unterschied zu der ersten Verbindungsplatte 10 ist die zweite Hauptleitung 4 jedoch auf der gleichen Seite wie die Rohre 9 aus der Verbindungsplatte 11 herausgeführt. Die zweite Hauptleitung 4 ist somit, wie auch aus den Figuren 1 und 2 erkennbar, in dem von den Rohren 9 umrandeten Flächenabschnitt, das heißt innerhalb des Wärmetauscherabschnitts 5, von dem zweiten Ende 8 in Richtung des ersten Endes 6 geführt. Hierbei ist die zweite Hauptleitung im Bereich des ersten Endes 6 zwischen den Verteilerkanälen 12 durch die erste Verteilerplatte 10 hindurchgeführt (s. Fig. 1 bis 3).

Über die Verteilerplatten 10 bzw. 11 erfolgt die Verteilung des Wärmeträgermediums zwischen der ersten oder der zweiten Hauptleitung 3 bzw. 4 und den Rohren 9 hydraulisch symmetrisch insofern als aufgrund der jeweils gleichartigen Verteilerkanäle 12 das Wärmeträgermedium in jedem der Rohre 9 unter gleichen Strömungsverhältnissen, also mit gleicher Strömungsgeschwindigkeit, strömt.

Wie aus den Figuren 1 bis 4 ersichtlich ist, ist die zweite Hauptleitung 4 durch einen Isoliermantel 14 gegenüber der Flüssigkeit 2 thermisch isoliert.

Der Wärmetauscherabschnitt 5 weist eine Länge L auf, die deutlich größer ist als die Breite des Durchflussquerschnitts des Wärmetauscherabschnitts 5, das heißt größer als die Summe der Rohrquerschnitte D_{R}. Die Länge L des Wärmetauscherabschnitts 5 ist zudem auch deutlich größer als der (Gesamt-)Durchmesser des hohlzylinderartigen Wärmetauscherabschnitts 5. Die Länge L des Wärmetauscherabschnitts 5 beträgt hierbei mindestens 4 m, in zweckmäßiger Dimensionierung zwischen 20 m und 40 m. Zur Stabilisierung der Rohre 9 und deren paralleler Anordnung über die Länge L weist der Wärmetauscherabschnitt 5 zwischen dem ersten Ende 6 und dem zweiten Ende 8 zwei Abstandhalter 16 auf. Die Abstandhalter 16 sind als Platten ausgeführt, durch die die Rohre 9 und die zweite Hauptleitung 4 hindurchgeführt sind (dargestellt durch gestrichelte Linien, s. Fig. 2).

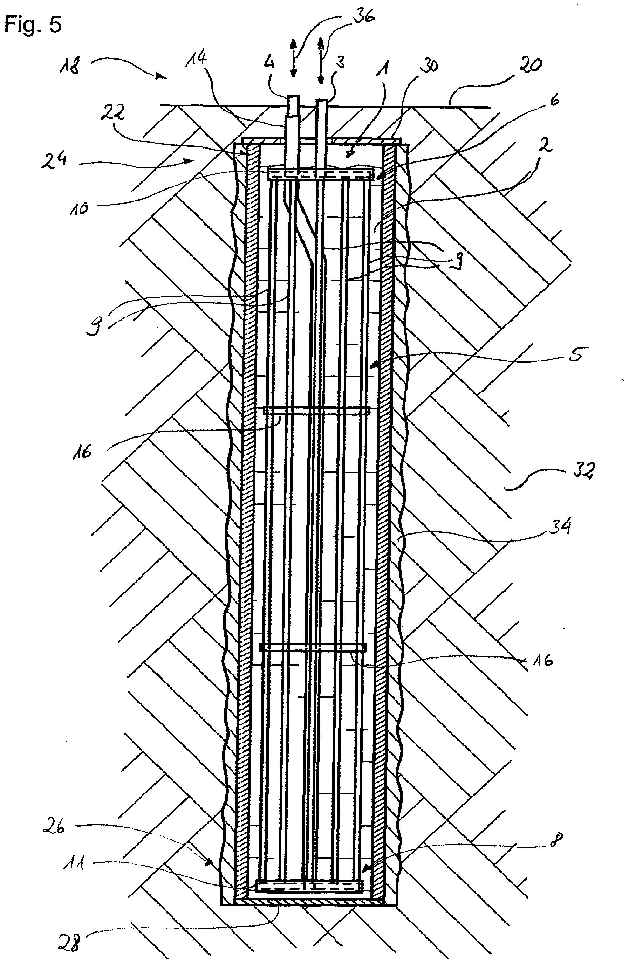

In Fig. 5 ist der Wärmetauscher 1 bei der Verwendung in einem Wärmemanagementsystem 18 dargestellt. Das Wärmemanagementsystem 18 umfasst dabei einen nicht näher dargestellten Wärmekreislauf, der das Wärmeträgermedium über die erste Hauptleitung 3 oder die zweite Hauptleitung 4 in den Wärmetauscher 1 bzw. den Wärmetauscherabschnitt 5 einspeist bzw. aus dem Wärmetauscherabschnitt 5 entnimmt. Des Weiteren umfasst das Wärmemanagementsystem 18 einen senkrecht in den Erdboden 20 eingelassenen Hohlpfahl 22, der mit der Flüssigkeit 2 gefüllt ist. Innerhalb des Hohlpfahls 22 ist der Wärmetauscher 1 derart angeordnet, dass der Wärmetauscherabschnitt 5 vollständig von der Flüssigkeit 2 umgeben ist. Der Wärmetauscherabschnitt 5 entspricht in seiner Länge L etwa der Länge des Hohlpfahls 22, so dass das erste Ende 6 des Wärmetauscherabschnitts 5 im Bereich des oberen Endes 24 des Hohlpfahls 22 angeordnet ist und das zweite Ende 8 des Wärmetauscherabschnitts 5 bis zum unteren Ende 26 des Hohlpfahls 22 reicht.

Der Hohlpfahl 22 ist an seinem unteren Ende 26 mit einer Abschlussplatte 28 flüssigkeitsdicht verschlossen. Das obere Ende 24 des Hohlpfahls 22 ist in dem in Fig. 5 dargestellten, bestimmungsgemäßen Einbauzustand durch einen Deckel 30 verschlossen, wobei die erste und zweite Hauptleitung 3, 4 des Wärmetauschers 1 durch den Deckel 30 hindurchgeführt sind. Um eine besonders gute Wärmeübertragung mit dem Erdreich 32 zu ermöglichen, ist der Hohlpfahl 22 mit einer Verpressmasse 34 in dem Erdreich 32 verpresst.

Je nachdem, ob das Wärmeträgermedium über den Wärmetauscher 1 zu kühlen oder zu erwärmen ist, können die erste und die zweite Hauptleitung 3, 4 sowohl als Vor- als auch als Rücklauf eingesetzt werden. Für den Fall, dass das Wärmeträgermedium abzukühlen ist, wird dieses über die erste Hauptleitung 3 in das erste Ende 6 des Wärmetauscherabschnitts 5 eingeleitet und strömt somit in Richtung des unteren Endes 26 des Hohlpfahls 22. Aufgrund des senkrechten Einbaus des Hohlpfahls 22 ergibt sich eine von oben nach unten kühler werdende Temperaturschichtung in der Flüssigkeit 2. Diese führt dazu, dass das Wärmeträgermedium beim Durchströmen des Wärmetauscherabschnitts 5 von oben nach unten zunehmend abgekühlt wird. Nach der Zusammenführung des Wärmeträgermediums über die Verteilerplatte 11 in die zweite Hauptleitung 4 verhindert der Isoliermantel 14, dass sich das in Richtung des oberen Endes 24 aufsteigende Wärmeträgermedium in der zweiten Hauptleitung 4 durch Wechselwirkung mit der Flüssigkeit 2 erwärmt. Für den Fall, dass ein kühles Wärmeträgermedium über das Wärmemanagementsystem 18 erwärmt werden soll, wird das Wärmeträgermedium über die zweite Hauptleitung 4 am unteren (kühlen) Ende 26 des Hohlpfahls 22 in den Wärmetauscherabschnitt 5 eingeleitet. Beim Aufsteigen durch die Rohre 9 in Richtung des oberen (warmen) Endes 24 des Hohlpfahls 22 erwärmt sich das Wärmeträgermedium und wird über die Verteilerplatte 10 und die erste Hauptleitung 3 entnommen. Die Eignung der ersten und zweiten Hauptleitung 3 und 4 als Vor- und Rücklauf ist durch die Fließrichtungspfeile 36 angedeutet.

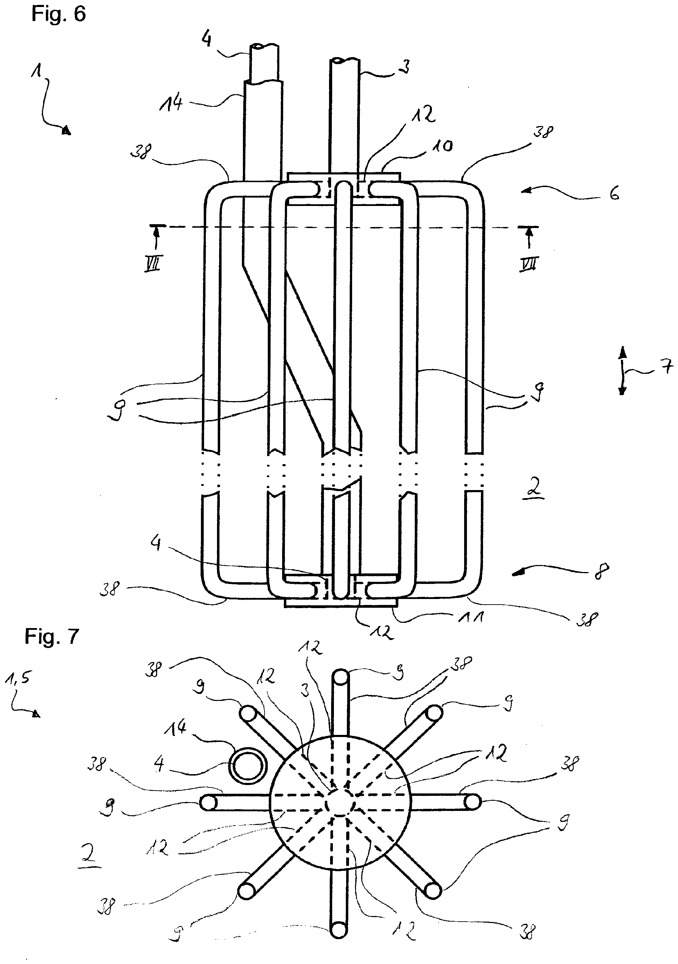

In Fig. 6 und Fig. 7 ist ein alternatives Ausführungsbeispiel des Wärmetauschers 1 dargestellt. Im Unterschied zu dem in den Figuren 1 bis 5 dargestellten Wärmetauscher 1 weisen hierbei die Verteilerplatten 10 und 11 jeweils einen gegenüber dem von den Rohren 9 umrandeten Flächenabschnitt kleineren Durchmesser auf. Die Rohre 9 sind über jeweils ein Winkelstück 38 mit den Verteilerkanälen 12 der Verteilerplatten 10 und 11 verbunden. Die Winkelstücke 38 sind dabei senkrecht zur Längsrichtung 7 und in Verlängerung des jeweiligen Verteilerkanals 12 aus den Verteilerplatten 10 bzw. 11 herausgeführt. Die zweite Hauptleitung 4 kann in nicht näher dargestellter Weise an der ersten Verteilerplatte 10 beispielsweise durch eine Rohrschelle fixiert sein.

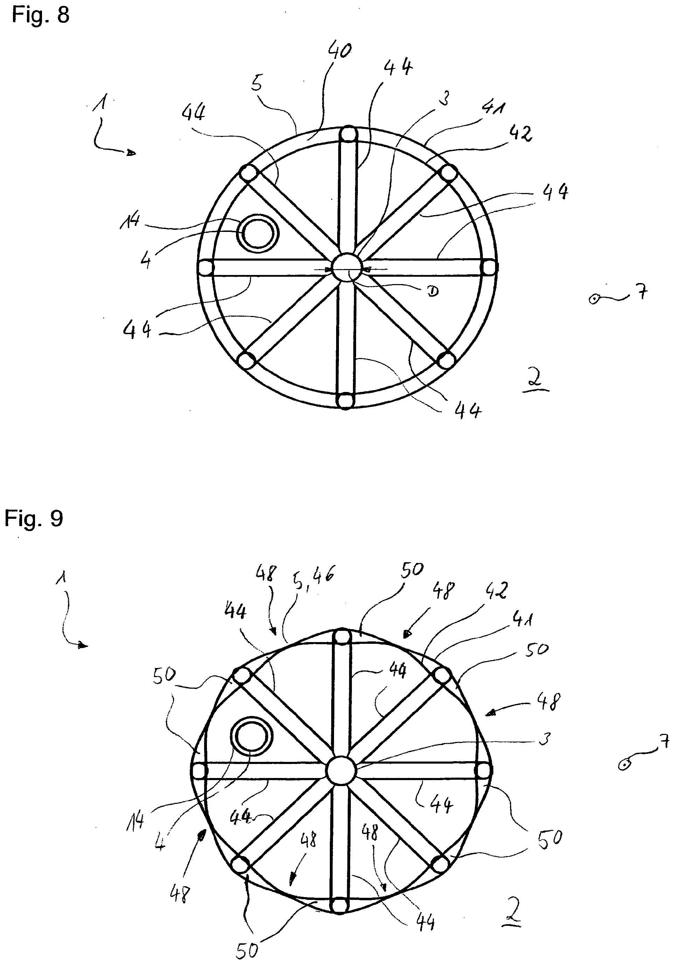

In einem alternativen Ausführungsbeispiel des Wärmetauschers 1 gemäß Fig. 8 ist der Wärmetauscherabschnitt 5 durch ein einzelnes doppelwandiges Rohr 40 gebildet. Das Wärmeträgermedium strömt hierbei in einem als Hohlzylinderschlitz bezeichneten Zwischenraum zwischen der äußeren Rohrwandung 41 und der inneren Rohrwandung 42 des doppelwandigen Rohres 40. Die Querschnittsfläche des Hohlzylinderschlitzes ist hierbei größer als die Querschnittsfläche bzw. der Hauptdurchflussquerschnitt D der ersten bzw. zweiten Hauptleitung 3, 4. Somit ergibt sich in dem Wärmetauscherabschnitt 5 ebenfalls die gegenüber den ersten und zweiten Hauptleitungen 3, 4 verlangsamte Strömungsgeschwindigkeit des Wärmeträgermediums.

Zur Verteilung des Wärmeträgermediums von der ersten Hauptleitung 3 auf das doppelwandige Rohr 40 ist die erste Hauptleitung 3 sternförmig über acht Verteilerrohre 44 mit dem doppelwandigen Rohr 40 verbunden. Die Anbindung der zweiten Hauptleitung 4 am zweiten Ende 8 des Wärmetauscherabschnitts 5 bzw. des doppelwandigen Rohres 40 erfolgt analog. Die Verteilung des Wärmeträgermediums auf den Wärmetauscherabschnitt 5 erfolgt auch bei diesem Ausführungsbeispiel insofern hydraulisch symmetrisch, als mit hinreichendem Abstand zu den Einmündungsstellen der Verteilerrohre 44 das Wärmeträgermedium innerhalb des Hohlzylinderschlitzes mit in Umfangsrichtung konstanter Strömungsgeschwindigkeit strömt.

In einem weiteren alternativen Ausführungsbeispiel gemäß Fig. 9 ist der Wärmetauscherabschnitt 5 durch ein doppelwandiges, im Nachfolgenden als Wellblechrohr 46 bezeichnetes Rohr gebildet. Die innere Rohrwandung 42 ist hierbei an acht Verbindungsstellen 48 mit der äußeren Rohrwandung 41 verbunden. Dadurch ergeben sich zwischen jeweils zwei Verbindungsstellen 48 insgesamt acht in Längsrichtung 7 verlaufende Strömungskanäle 50, in die die Hauptleitungen 3 und 4 mittels der Verteilerrohre 44 hydraulisch symmetrisch eingekoppelt sind. Die Summe der einzelnen Durchflussquerschnitte der Strömungskanäle 50 überschreitet wiederum den Hauptdurchflussquerschnitt D der ersten bzw. zweiten Hauptleitung 3, 4.

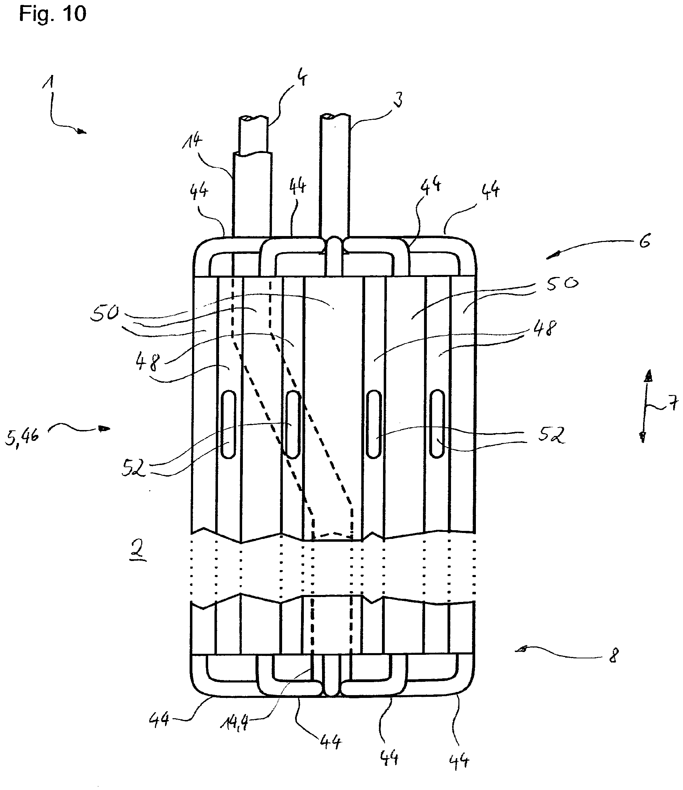

Wie aus Fig. 10 zu entnehmen ist, sind innerhalb der (langgestreckten) Verbindungsstellen 48 Durchbrüche 52 in dem Wellblechrohr 46 eingebracht. Die Durchbrüche 52 dienen beispielsweise dazu, den Wärmetauscherabschnitt 5 in dem in Fig. 5 dargestellten Hohlpfahl 22 zu befestigen und/oder einen Austausch der Flüssigkeit 2 zwischen der Innenseite und der Außenseite der hohlzylinderartigen Geometrie des Wärmetauscherabschnitts 5 zu ermöglichen.

Der Wärmetauscherabschnitt 5, insbesondere die Rohre 9, das doppelwandige Rohr 40 sowie das Wellblechrohr 46 sind beispielsweise aus rostfreiem und salzwasserresistentem Edelstahl gefertigt. Alternativ kann der Wärmetauscherabschnitt 5 beispielsweise aber auch aus vergleichbar resistentem Kunststoff mit hoher Wärmeleitfähigkeit gefertigt sein. Die Verteilerplatten 10 und 11 sowie die Abstandhalter 16 sind beispielsweise aus salzwasserresistentem Aluminium gefertigt.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

## Patentansprüche

1. Wärmetauscher (1) zur Wärmeübertragung zwischen einem Wärmeträgermedium und einer umgebenden Flüssigkeit (2),
- mit einer ersten Hauptleitung (3), die einen Hauptdurchflussquerschnitt (D) aufweist,
- mit einer zweiten Hauptleitung (4), und
- mit einem Wärmetauscherabschnitt (5), der von dem Wärmeträgermedium durchströmbar ist, und der einen gegenüber dem Hauptdurchflussquerschnitt (5) vergrößerten Wärmetauscherdurchflussquerschnitt aufweist, wobei der Wärmetauscherabschnitt (5) eine hohlzylinderartige Geometrie aufweist,
**dadurch gekennzeichnet,**
**dass** der Wärmetauscherabschnitt (5) an einem ersten Ende (6) mit der ersten Hauptleitung (3) und an einem zweiten Ende (8) mit der zweiten Hauptleitung (4) derart verbunden ist, dass das Wärmeträgermedium zwischen der ersten Hauptleitung (3) und dem Wärmetauscherabschnitt (5) bzw. der zweiten Hauptleitung (4) und dem Wärmetauscherabschnitt (5) hydraulisch symmetrisch verteilt wird, so dass das Wärmeträgermedium in jedem Teilquerschnitt des Wärmetauscherdurchflussquerschnitts (5) abgesehen von Randeffekten stets mit näherungsweise gleicher Strömungsgeschwindigkeit strömt, wobei der Wärmetauscherabschnitt (5) am ersten und am zweiten Ende (6,8) zentral mit der ersten Hauptleitung (3) bzw. mit der zweiten Hauptleitung (4) verbunden ist.

2. Wärmetauscher (1) nach Anspruch 1,
wobei der Durchflussquerschnitt der zweiten Hauptleitung (4) dem Hauptdurchflussquerschnitt (D) entspricht.

3. Wärmetauscher (1) nach Anspruch 1 oder 2,
wobei der Wärmetauscherabschnitt (5) eine in Strömungsrichtung (7) des Wärmeträgermediums langgestreckte Form aufweist.

4. Wärmetauscher (1) nach einem der Ansprüche 1 bis 3,
wobei der Wärmetauscherabschnitt (5) ein doppelwandiges Rohr (40) mit einem Strömungskanal umfasst, wobei der Strömungskanal durch einen Hohlzylinderschlitz zwischen den Rohrwandungen des doppelwandiges Rohrs (40) gebildet ist.

5. Wärmetauscher (1) nach einem der Ansprüche 1 bis 3,
wobei der Wärmetauscherabschnitt (5) mehrere langgestreckte Strömungskanäle (9,50) aufweist, die symmetrisch zueinander entlang einer Zylindermantelfläche angeordnet sind.

6. Wärmetauscher (1) nach einem der Ansprüche 1 bis 5,
wobei die erste Hauptleitung (3) und die zweite Hauptleitung (4) jeweils über einen Verteiler (10,11) sternförmig mit dem Wärmetauscherabschnitt (5) gekoppelt sind.

7. Wärmetauscher (1) nach einem der Ansprüche 1 bis 6,
wobei die zweite Hauptleitung (4) innerhalb der von dem Wärmetauscherabschnitt (5) umschlossenen Fläche in Richtung des ersten Endes (6) geführt ist.

8. Wärmetauscher (1) nach einem der Ansprüche 1 bis 7,
wobei die zweite Hauptleitung (4) gegenüber der Umgebung (2) thermisch isoliert ist.

9. Wärmetauscher (1) nach einem der Ansprüche 1 bis 8,
wobei die Strömungsrichtung (7) des Wärmeträgermediums in dem Wärmetauscherabschnitt (5) im Wesentlichen vertikal ausgerichtet ist.

10. Wärmemanagementsystem (18),
- mit einem Wärme-Kreislauf für ein Wärmeträgermedium,
- mit mindestens einem mit Flüssigkeit (2) gefüllten Hohlpfahl (22), der in den Erdboden (20) eingelassen ist, wobei der Hohlpfahl (22) eine im Vergleich zu seiner Breite wesentlich größere Länge aufweist, und wobei der Hohlpfahl (22) mit seiner Längsrichtung im Wesentlichen senkrecht zur Erdoberfläche ausgerichtet ist, und
- mit mindestens einem Wärmetauscher (1) nach einem der Ansprüche 1 bis 9, der mit dem ersten Ende (6) seines Wärmetauscherabschnitts (5) erdoberflächennah in dem Hohlpfahl (22) angeordnet ist, der mittels der ersten und zweiten Hauptleitung (3,4) an den Wärme-Kreislauf angeschlossen ist und der zur Wärmeübertragung zwischen der Flüssigkeit (2) und dem Wärme-Kreislauf von dem Wärmeträgermedium durchströmbar ist.

11. Wärmemanagementsystem (18) nach Anspruch 10,
wobei die erste Hauptleitung (3) als Vorlauf oder Rücklauf einsetzbar ist.

12. Wärmemanagementsystem (18) nach Anspruch 11,
wobei eine Anzahl von Wärmetauschern (1) nebeneinander in dem Hohlpfahl (22) angeordnet ist.

## Claims

1. Heat exchanger (1) for heat transmission between a heat transfer medium and a surrounding fluid (2),
- having a first main line (3) which has a main flow cross-section (D),
- having a second main line (4), and
- having a heat exchanger section (5), through which the heat transfer medium can flow, and which has an enlarged heat exchanger flow cross-section compared to the main flow cross-section (5), wherein the heat exchanger section (5) has a hollow cylindrical geometry,
**characterised in that**,
the heat exchanger section (5) is connected at a first end (6) to the first main line (3) and at a second end (8) to the second main line (4) in such a way that the heat transfer medium is hydraulically symmetrically distributed between the first main line (3) and the heat exchanger section (5) or between the second main line (4) and the heat exchanger section (5), such that the heat transfer medium flows constantly in each partial cross-section of the heat exchanger flow cross-section (5), apart from edge effects, with approximately equal flow velocity, wherein the heat exchanger section (5) on the first and on the second end (6, 8) is connected centrally to the first main line (3) or to the second main line (4).

2. Heat exchanger (1) according to claim 1,
wherein the flow cross-section of the second main line (4) corresponds to the main flow cross-section (D).

3. Heat exchanger (1) according to claim 1 or 2,
wherein the heat exchanger section (5) has a shape which is elongated in the flow direction (7) of the heat transfer medium.

4. Heat exchanger (1) according to one of claims 1 to 3,
wherein the heat exchanger section (5) comprises a double-walled tube (40) having a flow channel, wherein the flow channel is formed by a hollow cylindrical slot between the tube walls of the double-walled tube (40).

5. Heat exchanger (1) according to one of claims 1 to 3,
wherein the heat exchanger section (5) has several elongated flow channels (9, 50), which are arranged symmetrically relative to one another along a cylinder outer surface.

6. Heat exchanger (1) according to one of claims 1 to 5,
wherein the first main line (3) and the second main line (4) are each coupled in a star shape with the heat exchanger section (5) via a distributor (10, 11).

7. Heat exchanger (1) according to one of claims 1 to 6,
wherein the second main line (4) is guided within the surface enclosed by the heat exchanger section (5) in the direction of the first end (6).

8. Heat exchanger (1) according to one of claims 1 to 7,
wherein the second main line (4) is thermally isolated from the environment (2).

9. Heat exchanger (1) according to one of claims 1 to 8,
wherein the flow direction (7) of the heat transfer medium in the heat exchanger section (5) is substantially vertically orientated.

10. Heat management system (18),
- having a heat cycle for a heat transfer medium,
- having at least one hollow pile (22) filled with a fluid (2), said hollow pile being embedded in the ground (20), wherein the hollow pile (22) has a length substantially larger in comparison to its width, and wherein the hollow pile (22) is aligned substantially perpendicular to the surface of the earth, and
- having at least one heat exchanger (1) according to one of claims 1 to 9, which is arranged, with the first end (6) of its heat exchanger section (5), close to the surface of the earth in the hollow pile (22), which is connected to the heat cycle by means of the first and second main line (3, 4), and which is able to be flowed through by the heat transfer medium for heat transfer between the fluid (2) and the heat cycle.

11. Heat management system (18) according to claim 10,
wherein the first main line (3) is able to be used as forward flow or return flow.

12. Heat management system (18) according to claim 11,
wherein a number of heat exchangers (1) are arranged side by side in the hollow pile (22).

## Revendications

1. Echangeur de chaleur (1) pour la transmission de chaleur entre un fluide caloporteur et un liquide (2) environnant, comprenant
- une conduite principale (3), qui présente une section de passage d'écoulement principale (D),
- une deuxième conduite principale (4), et
- un tronçon d'échangeur de chaleur (5) à travers lequel peut s'écouler le fluide caloporteur, et qui présente une section de passage d'écoulement d'échangeur de chaleur augmentée par rapport à la section de passage d'écoulement principale (5), le tronçon d'échangeur de chaleur (5) présentant une géométrie sensiblement de forme cylindrique creuse,
**caractérisé**
**en ce que** le tronçon d'échangeur de chaleur (5) est, à une première extrémité (6), relié à la première conduite principale (3), et est, à une deuxième extrémité (8), relié à la deuxième conduite principale (4), de manière telle que le fluide caloporteur soit réparti de manière symétrique sur le plan hydraulique, entre la première conduite principale (3) et le tronçon d'échangeur de chaleur (5), respectivement entre la deuxième conduite principale (4) et le tronçon d'échangeur de chaleur (5), de sorte que le fluide caloporteur s'écoule toujours, dans chaque section partielle de la section de passage d'écoulement de tronçon d'échangeur de chaleur (5), sensiblement avec la même vitesse d'écoulement, exception faite d'effets limites, le tronçon d'échangeur de chaleur (5) étant relié au niveau de la première et de la deuxième extrémité (6, 8), de manière centrale, à la première conduite principale (3) et respectivement à la deuxième conduite principale (4).

2. Echangeur de chaleur (1) selon la revendication 1,
dans lequel la section de passage d'écoulement de la deuxième conduite principale (4) correspond à la section de passage d'écoulement principale (D).

3. Echangeur de chaleur (1) selon la revendication 1 ou la revendication 2,
dans lequel le tronçon d'échangeur de chaleur (5) présente une forme allongée dans la direction d'écoulement (7) du fluide caloporteur.

4. Echangeur de chaleur (1) selon l'une des revendications 1 à 3,
dans lequel le tronçon d'échangeur de chaleur (5) comprend un tube (40) à double paroi avec un canal d'écoulement, et dans lequel le canal d'écoulement est formé par un interstice cylindrique creux entre les parois de tube du tube à double paroi (40).

5. Echangeur de chaleur (1) selon l'une des revendications 1 à 3,
dans lequel le tronçon d'échangeur de chaleur (5) présente plusieurs canaux d'écoulement (9, 50) allongés, qui sont agencés de manière symétrique les uns par rapport aux autres le long d'une surface-enveloppe cylindrique.

6. Echangeur de chaleur (1) selon l'une des revendications 1 à 5,
dans lequel la première conduite principale (3) et la deuxième conduite principale (4) sont couplées, chacune respectivement par l'intermédiaire d'un distributeur (10, 11) en forme d'étoile, au tronçon d'échangeur de chaleur (5).

7. Echangeur de chaleur (1) selon l'une des revendications 1 à 6,
dans lequel la deuxième conduite principale (4) est menée en direction de la première extrémité (6), à l'intérieur de la surface enfermée ou entourée par le tronçon d'échangeur de chaleur (5).

8. Echangeur de chaleur (1) selon l'une des revendications 1 à 7,
dans lequel la deuxième conduite principale (4) est isolée thermiquement par rapport à l'environnement (2).

9. Echangeur de chaleur (1) selon l'une des revendications 1 à 8,
dans lequel la direction d'écoulement (7) du fluide caloporteur dans le tronçon d'échangeur de chaleur (5),
est d'une orientation sensiblement verticale.

10. Système de gestion thermique (18), comprenant
- un circuit fermé de chaleur pour un fluide caloporteur,
- au moins un pieu creux (22) rempli d'un liquide (2) et enfoncé dans le sol (20), le pieu creux (22) présentant une longueur sensiblement plus grande que sa largeur, et le pieu creux (22) étant orienté, avec sa direction longitudinale, sensiblement de manière perpendiculaire à la surface du sol, et
- au moins un échangeur de chaleur (1) selon l'une des revendications 1 à 9, qui, avec sa première extrémité (6) de son tronçon d'échangeur de chaleur (5), est agencé à proximité de la surface du sol dans le pieu creux (22), est raccordé au circuit fermé de chaleur au moyen de la première et de la deuxième conduite principale (3, 4), et à travers lequel peut s'écouler le fluide caloporteur pour produire un échange de chaleur entre le liquide (2) et le circuit fermé de chaleur.

11. Système de gestion thermique (18) selon la revendication 10,
dans lequel la première conduite principale (3) peut être utilisée comme conduite d'amenée ou comme conduite de retour.

12. Système de gestion thermique (18) selon la revendication 11,
dans lequel un certain nombre d'échangeurs de chaleur (1) sont agencés côte à côte dans le pieu creux (22).
